# FASCICULE DE BREVET EUROPEEN

(11) **EP 1 634 764 B1**
(45) Date de publication et mention de la délivrance du brevet: **07.01.2009**
(21) Numéro de dépôt: 05108260.0
(22) Date de dépôt: 08.09.2005
(51) Int. Cl.: B60N 2/28

(54) **Dispositif de puériculture comprenant un siège amovible, à moyens mécaniques de contrôle du verrouillage, et dispositif mécanique d'indication du verrouillage correspondant**
Abnehmbarer Kindersicherheitssitz mit mechanischen Mitteln zur Verriegelungskontrolle und mechanische Anzeigevorrichtung der entsprechenden Verriegelung
Child care device having a removable seat with mechanical means for controlling the locking and mechanical device for indicating the corresponding locking

(30) Priorité: 10.09.2004 FR 0409642
(43) Date de publication de la demande: 15.03.2006
(73) Titulaire: DOREL FRANCE SA, 49309 Cholet Cedex (FR)
(72) Inventeur: Biaud, Richard, 49340 Trementines (FR)
(74) Mandataire: Bioret, Ludovic

(56) Documents cités:
- EP-A- 0 714 806
- EP-A- 0 976 607
- EP-A- 1 170 168
- DE-A1- 10 030 953
- DE-C1- 19 738 802
- US-B1- 6 631 958
- PATENT ABSTRACTS OF JAPAN vol. 2000, no. 26, 1 juillet 2002 (2002-07-01) & JP 2001 246972 A (TOKAI RIKA CO LTD), 11 septembre 2001 (2001-09-11)

## Description

Le domaine de l'invention est celui de la puériculture, et plus précisément des dispositifs de puériculture comprenant un siège pour enfant destiné à être solidarisé à une structure de réception, par exemple un véhicule automobile. Plus précisément, l'invention concerne le contrôle du verrouillage d'un tel siège sur sa structure de réception.

L'invention peut ainsi s'appliquer à des sièges pour enfants destinés à être montés dans des véhicules automobile. Elle peut également s'appliquer à des sièges pour enfants destinés à être solidarisés à d'autres types de structure de réception, par exemple l'armature d'une poussette, ou encore d'une chaise haute, sur lesquelles le siège pour enfant viendrait se verrouiller par le biais de plusieurs éléments de fixation.

Dans tous les cas, la fixation, ou solidarisation, à la structure de réception se fait par au moins deux points, et il est bien sûr important de vérifier que la solidarisation est effectuée correctement sur ces deux points. Cela est notamment crucial dans le domaine des sièges pour automobile.

Depuis longtemps différents types de sièges pour enfant sont prévus pour être montés dans les véhicules automobiles. Le plus souvent ces sièges pour enfant sont solidarisés au siège de la voiture sur lequel ils sont montés à l'aide de la ceinture de sécurité présente à cet emplacement (directement ou par l'intermédiaire d'une embase).

Récemment, on a également proposé d'équiper les véhicules automobiles d'éléments fixes, accessibles entre l'assise et le dossier du siège de l'automobile, et prévus pour coopérer avec des pinces d'ancrage complémentaires prévues sur le siège pour enfant, ou sur une embase adaptée.

Cette technique est connue sous le nom de norme "ISOFIX" (marque déposée). Elle s'avère relativement avantageuse en termes de facilité de montage du siège pour enfant. En effet, il suffit d'encliqueter ce dernier sur les éléments correspondants du véhicule sans qu'il soit nécessaire de faire appel à la ceinture de sécurité, ce qui est souvent considéré par les utilisateurs comme une opération relativement complexe. En outre, la solidarisation est alors efficace, et le risque de mauvaise utilisation est réduit. La présente invention s'applique notamment, mais non exclusivement, aux dispositifs comprenant un siège fixé à une structure de réception selon cette technique « ISOFIX ».

Pour garantir un bon niveau de sécurité au siège auto fixé selon cette technique, il faut absolument que chacune des pinces d'ancrage du siège soit correctement verrouillée aux emplacements prévus dans le siège de la voiture.

Selon une première approche, on peut envisager de contrôler la bonne solidarisation du siège au moyen de contrôles indépendants de chacun des éléments de fixation où un dispositif d'indication du verrouillage signalait que l'éléments de fixation était convenablement verrouillé. L'inconvénient de cette approche est que le contrôle de la solidarisation s'effectue en différents points indépendants, ce qui nécessite plusieurs étapes et donc une attention soutenue. Par ailleurs, un utilisateur peut penser avoir correctement solidarisé l'ensemble du siège pour enfant alors qu'il n'a contrôlé que l'un des élément de fixation, ce qui s'avère très dangereux.

C'est pourquoi la réglementation ISOFIX impose qu'un indicateur unique signale à l'usager qui installe le siège que toutes les pinces de fixation sont verrouillées, ou qu'au contraire au moins l'une des pinces de fixation n'est pas verrouillée.

Cet indicateur peut être commandé électroniquement. Un indicateur, par exemple une diode électroluminescente (LED) est allumée si, et seulement si, toutes les pinces sont verrouillées. Cette approche présente cependant l'inconvénient d'ajouter au siège enfant des composants électroniques ainsi que leur alimentation.

Le siège pour enfants n'étant lié au siège du véhicule en permanence, il est difficile de le connecter au circuit électrique du véhicule.

Un simple circuit électronique ne consommant que très peu d'énergie, son alimentation peut se faire avec une pile, mais cela pose également des problèmes. En effet, une fois la durée de vie de la pile écoulée, le système de signal ne peut plus fonctionner avant que la pile soit changée. Dans cet intervalle, le siège sera utilisé dans de mauvaises conditions de sécurité, ou ne sera pas utilisé du tout.

Un système déclenchant une alarme quand la pile est sur le point d'être usée aurait l'avantage de prévenir l'adulte utilisateur du siège avant que le système de sécurité soit hors de service, mais il risque également d'importuner les utilisateurs qui pourraient dans ce cas enlever la pile vieillissante pour désactiver l'alarme, sans forcement la remplacer par une pile neuve.

Plus généralement, si la pile est usée, le système ne fonctionne plus, et il n'y a plus de possibilité de signaler cette défaillance.

Du document EP 097 6607 on connaît un dispositif de puériculture, qui montre les caractéristiques du préambule de la revendication 1.

L'invention a notamment pour objectif de pallier ces inconvénients de l'art antérieur.

Plus particulièrement, l'invention a pour objectif de fournir une technique permettant aux utilisateurs de contrôler de manière simple et efficace la solidarisation d'un siège pour enfant à une structure de réception, et par exemple à un véhicule.

Un autre objectif de l'invention est de fournir une telle technique qui n'engendre pas de risque de confusion ni de mauvaise fixation, et notamment de fixation partielle. En d'autres termes, l'invention a pour objectif de proposer une telle technique, qui permette d'assurer la sécurité de l'enfant transporté, en permettant aisément à l'utilisateur de contrôler que le siège est correctement installé et complètement solidarisé au véhicule.

L'invention a également pour objectif de fournir un tel dispositif qui ne nécessite aucune alimentation électrique, ni aucun élément électronique.

Encore un autre objectif est de proposer une telle technique, qui ne nécessite pas de moyens complexes, encombrants et coûteux, qui en particulier ne nécessite pas d'alimentation électrique, et qui soit facile à réaliser et à assembler.

Ces objectifs, ainsi que d'autres qui apparaîtront plus clairement par la suite, sont atteints à l'aide d'un dispositif de puériculture comprenant un siège prévu pour être solidarisé à une structure de réception par l'intermédiaire d'au moins deux éléments de fixation, qui, selon l'invention, comprend des moyens mécaniques d'indication du verrouillage correct desdits éléments de fixation avec ladite structure de réception comprenant :
- une première pièce, dite pièce d'entrée, mobile entre deux positions pour chacun desdits éléments de fixation, une première position prise lorsque ledit élément de fixation n'est pas verrouillé, et une seconde position prise lorsque ledit élément de fixation est verrouillé ;
- une seconde pièce, dite pièce de sortie, mobile entre deux positions, une première position prise lorsque l'ensemble desdits éléments de fixation sont verrouillés, et une seconde position prise lorsque au moins un desdits éléments de fixation n'est pas verrouillé,
chacune desdites pièces d'entrée comprenant au moins une première portion de butée susceptible de venir en prise avec une seconde portion de butée de ladite pièce de sortie, lesdites premières portions de butée étant agencées de façon à agir sur ladite seconde portion de butée pour placer ladite pièce de sortie dans l'une ou l'autre desdites positions.

Ainsi, de façon exclusivement mécanique, on peut obtenir une indication fiable du bon verrouillage du siège. De plus, cette indication sera unique, et indiquera le verrouillage de tous les points de fixations.

Selon un mode de réalisation avantageux de l'invention, lesdites pièces d'entrée et de sortie sont mobiles en rotation, sur une plage angulaire prédéterminée.

Préférentiellement, lesdites pièces d'entrée et de sortie sont montées sur un même axe de rotation.

Selon un mode de mise en oeuvre de l'invention, ce dispositif comprend deux pièces d'entrée, et ladite pièce de sortie est placée entre lesdites pièces d'entrée.

La pièce de sortie peut ainsi de façon particulièrement simple être actionnée par l'une des pièces d'entrée.

Selon un aspect préférentiel de l'invention, ce dispositif comprend des moyens de rappel ramenant ladite pièce de sortie dans sa seconde position dès qu'une desdites pièces d'entrée est dans sa première position.

De façon avantageuse, chaque pièce d'entrée est solidarisée à l'élément de fixation correspondant par un premier câble.

Préférentiellement ladite pièce de sortie agit sur un second câble, pour actionner au moins un témoin de verrouillage.

Selon un mode de réalisation particulier de l'invention, ledit second câble est dédoublé par des moyens prévus à cet effet, pour agir sur deux témoins de verrouillage.

Ainsi, on pourra avoir sur le siège plusieurs voyants, par exemple un de chaque côté, qui indiqueront tous les deux la même indication du verrouillage correct du siège.

Préférentiellement, lesdits moyens mécaniques d'indication du verrouillage sont montés de façon que lesdits premiers câbles et ledit second câble y pénètrent dans une même zone.

Selon une approche particulière de l'invention, ledit dispositif comprend des moyens de rappel agissant sur lesdites pièces d'entrée et/ou sur lesdites pièces de sortie de façon à tendre à les ramener dans une position prédéterminée.

De façon avantageuse, chacune desdites pièces d'entrée porte un ressort tendant à les ramener dans ladite première position.

Selon un mode de réalisation particulier, ledit ressort est un ressort spiral.

Selon un aspect préférentiel de l'invention, ledit ressort est monté de façon à créer un bi-stable, n'imposant pas d'effort dans lesdites première et seconde positions.

Selon un mode de réalisation particulier de l'invention, lesdites pièces d'entrée sont conçues de façon à actionner le déverrouillage desdits éléments de fixation.

Selon une caractéristique particulière de l'invention, lesdits moyens mécaniques d'indication du verrouillage portent une commande manuelle permettant de déplacer lesdites pièces d'entrée pour actionner le déverrouillage desdits éléments de verrouillage.

De façon avantageuse, ladite commande comprend un premier bouton de commande coulissant.

Préférentiellement, ledit premier bouton de commande comprend des moyens de rappel tendant à le ramener dans une position de repos.

Avantageusement ladite commande comprend un second bouton de sécurité, empêchant dans une position par défaut le déplacement d'un premier bouton conçu pour agir sur lesdites pièces d'entrée.

On aura donc ainsi une double sécurité empêchant le déverrouillage du siège par inadvertance.

Avantageusement, ladite structure de réception est montée dans un véhicule automobile, et lesdits éléments de fixation sont des fixations selon la norme ISOFIX.
Selon un mode de réalisation particulier, les pièces d'entrée sont sensiblement rectilignes et mobiles sur un unique axe de rotation, la pièce de sortie est également mobile sur l'axe unique de rotation, et présente une portion s'étendant sensiblement parallèlement à l'axe de rotation, contre laquelle viennent en appui les pièces d'entrée.

Cette approche permet notamment de gérer simplement trois (ou plus) signaux d'entrée.
De façon avantageuse, la pièce de sortie a une forme générale en « U », dont les deux branches sont solidaires de l'axe de rotation.

D'autres caractéristiques et avantages de l'invention apparaîtront à la lecture de la description suivante de deux modes de réalisation préférentiels, donné à titre de simple exemple illustratif et non limitatif, et des dessins annexés parmi lesquels :
- la figure 1 présente schématiquement un siège pour enfant comprenant un dispositif mécanique selon un mode de réalisation de l'invention ;
- la figure 2 présente un élément de fixation de type « ISOFIX » ;
- la figure 3 présente une vue en perspective du dispositif mécanique comportant les pièces d'entrée et de sorties ;
- les figures 4a, 4b et 4c illustrent les positions principales pouvant être prises par le dispositif mécanique ;
- La figure 5 présente en vue latérale un mécanisme selon un deuxième mode de réalisation de l'invention, prévu pour trois signaux d'entrée ;
- La figure 6 montre en vue de face le mécanisme de la figure 6.

Le principe général de l'invention est donc de prévoir un « signal » mécanique de contrôle unique qui est activé lorsque le siège pour enfant est correctement verrouillé à sa structure porteuse.

On utilise ici le terme « signal » par analogie avec l'approche électronique, les moyens de l'invention assurant, comme on le verra plus en détail par la suite, une fonction « ET » sur au moins deux « signaux » d'entrée pour délivrer un « signal » de sortie. Cette fonction est réalisée mécaniquement, et non, classiquement, électroniquement. Les « signaux » sont ici réalisés sous la forme de câbles. Il pourrait également s'agir de tringles, de biellettes... De la même façon, on utilise par analogie les termes « entrée » et « sortie ». Il est à noter que la réalisation mécanique d'une telle fonction ET n'est pas évidente, l'Homme du Métier était en effet persuadé que seule l'approche électronique était envisageable.

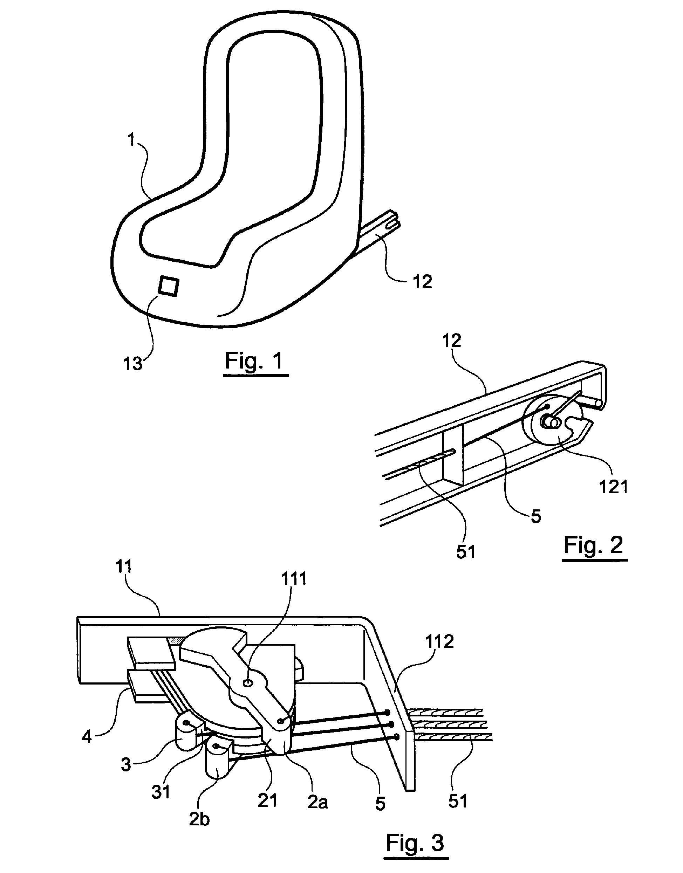

L'invention est destinée à équiper des, ou à coopérer avec les, sièges pour enfant, prévus pour être solidarisés à une structure porteuse et notamment aux sièges pour véhicules automobiles tels que par exemple celui illustré schématiquement en figure 1.

Par souci de simplification, on s'attache dans toute la suite du document à décrire un mode particulier de réalisation dans lequel la structure porteuse est un siège de véhicule automobile muni de dispositif de fixation de type « ISOFIX », tel que celui illustré schématiquement figure 1. L'invention s'applique bien sûr également à tous les autres cas de sièges pour enfants solidarisables à une structure porteuse, par exemple aux sièges solidarisables à une structure de poussette, ou encore de chaise haute. L'homme du métier étendra sans difficulté l'enseignement ci-dessous à ces autres cas.

Dans le mode particulier de réalisation de l'invention décrit dans ce document, le siège pour enfant 1 comprend au moins deux éléments de fixation 12 et au moins un témoin de verrouillage 13/14 qui indique que tous les éléments de fixation 12 sont correctement verrouillés.

Comme illustré sur la figure 2, chaque élément de fixation 12 comprend une pièce mobile qui vient, en basculant, bloquer le point de fixation de la structure de réception. Cette pièce mobile est liée à un premier câble 5. Ainsi, au moment du verrouillage, la pièce 121 bascule et exerce une traction sur le câble 5. Pour déverrouiller l'élément de fixation 12, il faudra par contre tirer dans l'autre sens le câble 5 pour faire basculer dans l'autre sens la pièce 121 et ainsi libérer le point de fixation de la structure de réception.

La circulation du câble 5 à travers le siège pour enfant 1 peut par exemple se faire dans une gaine 51.

La figure 3 représente le dispositif mécanique qui permet de générer le signal de sortie. On peut y voir plusieurs pièces mobiles en rotation autour du même axe 111, qui sont liées chacune à un câble.

Parmi ces pièces, on peut distinguer :
- une première pièce 2a, dite pièce d'entrée, à laquelle est lié un câble 5 qui la relie à un des éléments de fixation du siège
- une deuxième pièce d'entrée 2b, à laquelle est lié un autre câble 5 qui la relie à un des éléments de fixation du siège
- une troisième pièce 3, dite de sortie, à laquelle est lié un câble

6 qui la relie aux témoins de verrouillage.

Comme il est représenté sur la figure 3, chaque câble 5 est donc lié, selon l'invention, à une pièce d'entrée 2, qui est liée elle-même au support 11 du mécanisme par un axe 111.

Les pièces d'entrée 2 ne sont mobiles en rotation que sur une plage angulaire déterminée autour de cet axe 111. Plus précisément, ces pièces peuvent bouger entre deux positions stables qui correspondent, l'une à l'état verrouillé de l'élément de fixation 12 correspondant, l'autre à son état déverrouillé.

Un jeu de ressorts, non représenté, tend à ramener la pièce d'entrée 2 dans l'une de ces deux position si elle se trouve dans une position intermédiaire. Dans chacune de ces positions en effet, la pièce d'entrée est stable, les ressorts ne lui imposant pas d'efforts. Avantageusement, ce ressort est un ressort spiral s'étendant selon l'axe principal de la pièce, et jouant le rôle d'un bi-stable.

Le siège pour enfants 1 étant solidarisé à sa structure de réception par l'intermédiaire de plusieurs éléments de fixation, plusieurs pièces d'entrée 2 sont montées sur le même axe 111. Chacune de ces pièces d'entrée 2 est solidarisée à un élément de fixation 12 par un câble 5, et peut prendre les deux mêmes positions angulaires, correspondant à l'état verrouillé d'une part, et déverrouillé d'autre part, de son élément de fixation.

Chacune de ces pièces d'entrée 2 comprend une portion de butée 21. L'unique pièce de sortie 3, montée sur le même axe 111, comprend une portion de butée 31 pouvant être en contact avec toutes les portions de butée 21 des pièces d'entrée 2. S'il y a deux pièces d'entrée, la pièce de sortie peut par exemple être placée entre les deux pièces d'entrée. Cette pièce de sortie 3 est liée à un câble 6 qui actionne les témoins de verrouillage 13.

Avantageusement, tous les câbles d'entrée et de sortie pénètrent dans le mécanisme dans une même zone, ce qui permet de faciliter le montage du mécanisme.

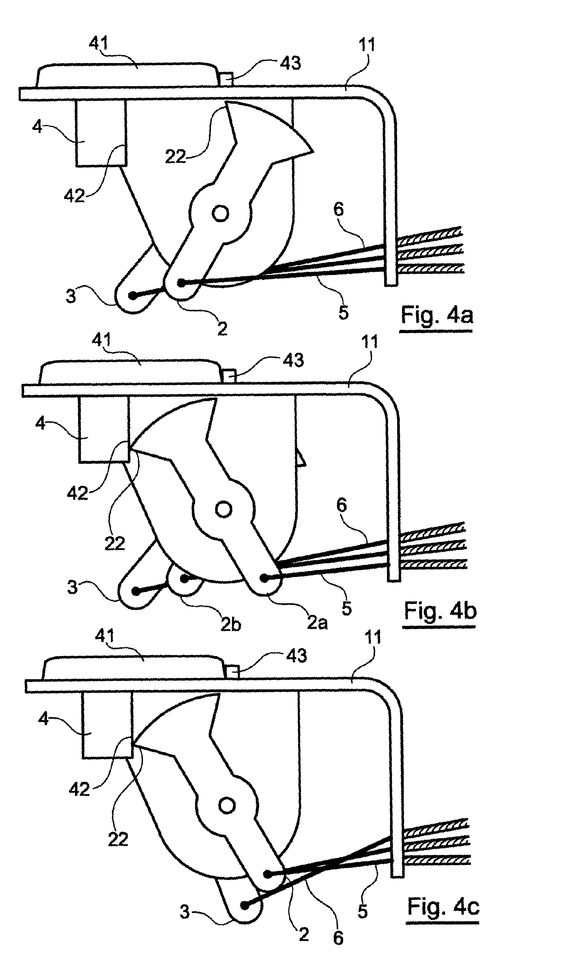

Ainsi, quand comme représenté sur la figure 4a, toutes les pièces d'entrée 2 sont dans la position correspondant à l'état non verrouillé, la pièce de sortie 3, en contact avec les pièces d'entrée 2 au niveau de leurs portions de butée respectivement 31 et 21, est maintenue par ces pièces d'entrée 2 dans une position dite de non-verrouillage. Le câble 6, lié à la pièce de sortie 3 met alors les témoins de verrouillage 13 et 14 dans un état de non-verrouillage, correspondant par exemple à l'affichage d'une couleur rouge dans une ouverture.

Quand, comme représenté sur la figure 4b, l'une des pièces d'entrée 2b est dans la position correspondant à l'état non verrouillé, alors qu'une autre des pièces d'entrée 2a est dans la position correspondant à l'état verrouillé, alors la pièce de sortie 3, en contact avec la pièce d'entrée 2b au niveau de leurs portion de butée respectivement 31 et 21b, est maintenue par cette pièce d'entrée 2b dans ladite position de non-verrouillage. Le câble 6, lié à la pièce de sortie 3 maintient encore les témoins de verrouillage 13 et 14 dans un état de non-verrouillage.

Quand, comme représenté sur la figure 4c, les deux pièces d'entrée 2a et 2b sont dans la position correspondant à l'état verrouillé, la pièce de sortie 3 est ramenée par un moyen de rappel en contact avec les pièces d'entrée 2 au niveau de leurs portions de butée, est maintenue dans une position dite de verrouillage. Le câble 6, lié à la pièce de sortie 3 met alors le témoin de verrouillage 13 dans un état de verrouillage, correspondant par exemple à l'affichage d'une couleur verte dans l'ouverture. L'utilisateur sait alors que tous les éléments de fixation du siège sont correctement verrouillés, et qu'il peut donc l'utiliser en toute sécurité.

On peut également prévoir, pour augmenter la sécurité, que le « signal » de sortie empêche, par un moyen adapté, l'installation de l'enfant tant que le double verrouillage n'est pas correctement effectué.

Le support du mécanisme 11 supporte également une commande de déverrouillage 4. Cette commande, comme indiqué sur les figure 4a, 4b et 4c, comporte un premier bouton de commande coulissant 41, prévu pour coulisser le long du support du mécanisme 11 sur quelques centimètres. Une butée de déverrouillage 42 est associée à ce bouton de commande 41. Cette butée de déverrouillage 42 est prévue pour venir en contact avec les butées 22 des pièces d'entrée 2.

Quand l'utilisateur fait coulisser ce premier bouton de déverrouillage 41, la buté de déverrouillage 42 vient en contact avec les pièces d'entrée 2 qui sont en position correspondant à l'état verrouillé, et ramène ces pièces dans la position correspondant à l'état déverrouillé. Ce déplacement a pour effet de tirer sur les câbles 5 correspondant aux pièces se déplaçant, et par conséquent d'agir sur les éléments de fixation 12 de façon à déverrouiller effectivement ces éléments. Ce sont donc les pièces d'entrée qui actionnent le déverrouillage des éléments de fixation 12.

Pour éviter tout déverrouillage intempestif, des moyens de sécurité peuvent être prévus, par exemple sous la forme d'un bouton 43, qu'il faut maintenir enfoncé pour pouvoir déplacer le bouton principal 41.

Quand l'utilisateur relâche le bouton 41, celui-ci est ramené à sa position de repos par des moyens de rappel, et le bouton 43 reprend sa place initiale.

Si toutes les pièces d'entrée étaient en position correspondant à l'état verrouillé, alors la pièce de sortie était en position dite verrouillée. Dans ce cas, l'action de déverrouillage a également pour effet de ramener la pièce de sortie en position dite non-verrouillée, par l'action des zones de butée 21 des pièces 2 sur la zone de butée 31 de la pièce 3. Le témoin de verrouillage 13 indique alors que les éléments de fixation 12 ne sont plus tous solidarisés à la structure de réception.

Il faut noter que l'invention apporte une solution très simple, et très efficace, au problème du contrôle du verrouillage, sans moyens électroniques. Elle ne nécessite pas non plus de moyens spécifiques importants, puisque les câbles sont nécessaires au déverrouillage. Seule la structure des moyens assurant la fonction « ET » doivent être insérés.

Un seul témoin, solidarisé au câble 6, peut être prévu, par exemple en face avant du siège. Cependant, de façon avantageuse, on prévoit deux témoins 13, 14, un de chaque côté du siège. Dans ce cas, des moyens de dédoublement, connus en soi, sont mis en oeuvre pour obtenir le même résultat.

Il est également possible de compléter le système de l'invention pour gérer, selon la même approche, trois « signaux » d'entrée, voire plus. On peut notamment ainsi, dans le cas d'« ISOFIX », prendre en compte également le verrouillage supérieur.

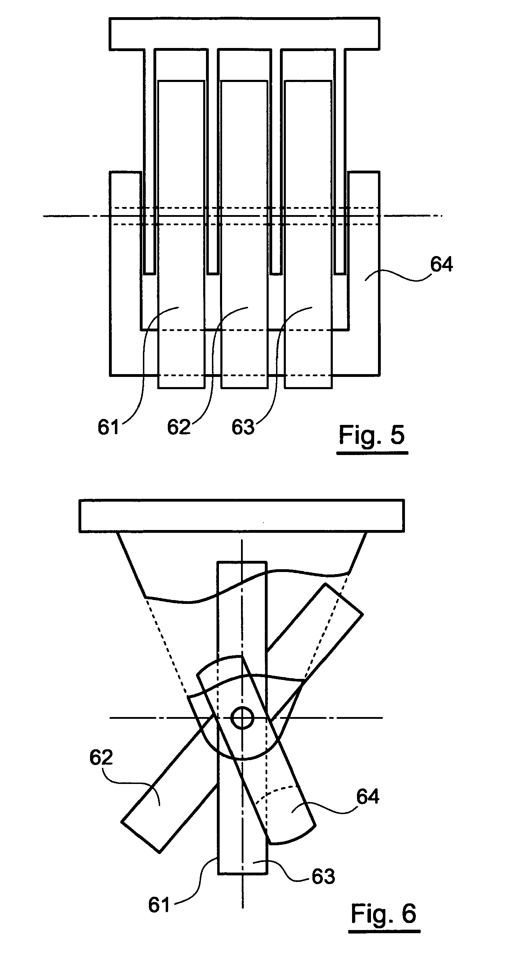

Les figures 5 et 6 illustrent un dispositif mécanique selon un autre mode de réalisation de l'invention, spécialement adapté au cas ou il y a plus de deux « signaux » d'entrée.

On peut ainsi distinguer sur ces deux figures 5 et 6 trois pièces d'entrée 61, 62 et 63, et une pièce de sortie 64, montées en rotation sur le même axe. Selon ce mode de réalisation, la pièce de sortie a une forme générale de U et encadre les trois pièces d'entrée.

Comme dans le mode de réalisation précédent, la pièce de sortie 64 est en contact avec les pièces d'entrée 61, 62 et 63. Le fonctionnement du mécanisme est similaire dans les deux modes de réalisation :
- tant qu'une des pièces d'entrée est maintenue dans sa position « non verrouillée » (position de la pièce 61, figure 6) la pièce de sortie 64 bascule, pour prendre sa position globale « non verrouillée », agissant alors sur l'indicateur (position de la pièce 64, figure 6) ;
- lorsque les trois pièces d'entrée sont dans la position « verrouillée » (position de la pièce 62, figure 6), la pièce de sortie 64 bascule, pour prendre sa position globale « verrouillée », agissant alors sur l'indicateur (non représenté).

Dès qu'une des pièces d'entrée revient dans la position «non verrouillée », il ramène la pièce de sortie (quelle que soit la position des deux autres pièces d'entrée).

Il est bien sûr possible de généraliser cette approche à plus de trois éléments d'entrée. La forme des différentes pièces peut être adaptée. Par exemple, la pièce de sortie peut avoir une forme en « L » ou en forme de « C »

L'homme du métier pourra inverser les rôles et le fonctionnement des pièces d'entrée et de sorties, les combiner de façon différente, et par exemple associer une pièce de sortie à certaines pièces d'entrée et une autre pièce de sortie à d'autres pièces d'entrée, ou adapter leur mise en oeuvre. Par exemple, les pièces mobiles en rotation pourraient être montées coulissantes, pour obtenir le même résultat.

Bien sûr, d'autres modes de signalisation peuvent être utilisés, à titre d'alternative ou de compléments.

## Revendications

1. Dispositif de puériculture comprenant un siège prévu pour être solidarisé à une structure de réception par l'intermédiaire d'au moins deux éléments de fixation,
**caractérisé en ce qu'**il comprend des moyens mécaniques d'indication du verrouillage correct desdits éléments de fixation avec ladite structure de réception comprenant :
- une première pièce, dite pièce d'entrée (2), mobile entre deux positions pour chacun desdits éléments de fixation (12), une première position prise lorsque ledit élément de fixation (12) n'est pas verrouillé, et une seconde position prise lorsque ledit élément de fixation (12) est verrouillé ;
- une seconde pièce, dite pièce de sortie (3), mobile entre deux positions, une première position prise lorsque l'ensemble desdits éléments de fixation (12) sont verrouillés, et une seconde position prise lorsque au moins un desdits éléments de fixation (12) n'est pas verrouillé,
chacune desdites pièces d'entrée (2) comprenant au moins une première portion de butée (21) susceptible de venir en prise avec une seconde portion de butée (31) de ladite pièce de sortie, lesdites premières portions de butée (21) étant agencées de façon à agir sur ladite seconde portion de butée (31) pour placer ladite pièce de sortie (3) dans l'une ou l'autre desdites positions.

2. Dispositif de puériculture selon la revendication 1, **caractérisé en ce que** lesdites pièces d'entrée (2) et de sortie sont mobiles en rotation, sur une plage angulaire prédéterminée.

3. Dispositif de puériculture selon l'une quelconque des revendications 1 ou 2, **caractérisé en ce qu'**il comprend des moyens de rappel ramenant ladite pièce de sortie (3) dans sa seconde position dès qu'une desdites pièces d'entrée (2) est dans sa première position.

4. Dispositif de puériculture selon l'une quelconque des revendications 1 à 3, **caractérisé en ce que** chaque pièce d'entrée (2) est solidarisée à l'élément de fixation (12) correspondant par un premier câble (5) et que **en ce que** ladite pièce de sortie (3) agit sur un second câble (6), pour actionner au moins un témoin de verrouillage.

5. Dispositif de puériculture selon la revendication 4, **caractérisé en ce que** ledit second câble (6) est dédoublé par des moyens prévus à cet effet, pour agir sur deux témoins de verrouillage (13).

6. Dispositif de puériculture selon l'une quelconque des revendications 1 à 5, **caractérisé en ce qu'**il comprend des moyens de rappel agissant sur lesdites pièces d'entrée (2) et/ou sur lesdites pièces de sortie (3) de façon à les ramener dans une position prédéterminée.

7. Dispositif de puériculture selon la revendication 6, **caractérisé en ce que** chacune desdites pièces d'entrée (2) porte un ressort tendant à les ramener dans ladite première position.

8. Dispositif de puériculture selon la revendication 7, **caractérisé en ce que** ledit ressort est monté de façon à créer un bi-stable, n'imposant pas d'effort dans lesdites première et seconde positions.

9. Dispositif de puériculture selon l'une quelconque des revendications 1 à 8,
**caractérisé en ce que** lesdites pièces d'entrée (2) sont conçues de façon à actionner le déverrouillage desdits éléments de fixation (12).

10. Dispositif de puériculture selon la revendication 9, **caractérisé en ce que** lesdits moyens mécaniques d'indication du verrouillage portent une commande manuelle permettant de déplacer lesdites pièces d'entrée (2) pour actionner le déverrouillage desdits éléments de verrouillage.

11. Dispositif de puériculture selon l'une quelconque des revendications 1 à 10, **caractérisé en ce que** ladite structure de réception est montée dans un véhicule automobile, et **en ce que** lesdits éléments de fixation (12) sont des fixations selon la norme ISOFIX.

12. Dispositif de puériculture selon l'une quelconque des revendications 1 à 11, **caractérisé en ce que** lesdites pièces d'entrée (61, 62, 63) sont sensiblement rectilignes et mobiles sur un unique axe de rotation (111), et **en ce que** ladite pièce de sortie (64) est également mobile sur ledit axe unique de rotation (111), et présente une portion s'étendant sensiblement parallèlement audit axe de rotation (111), contre laquelle viennent en appui lesdites pièces d'entrée (61, 62, 63).

13. Dispositif de puériculture selon la revendication 12, **caractérisé en ce que** ladite pièce de sortie (64) a une forme générale en « U », dont les deux branches sont solidaires dudit axe de rotation (111).

## Claims

1. Child-care device comprising a seat which is intended to be fastened to a receiving structure via at least two fixing elements,
**characterised in that** it comprises mechanical means for indicating the correct locking of the said fixing elements to the said receiving structure comprising:
- a first piece, referred to as the "entry piece" (2), which is movable between two positions for each of the said fixing elements (12), a first position which is assumed when the said fixing element (12) is not locked, and a second position which is assumed when the said fixing element (12) is locked;
- a second piece, referred to as the "exit piece" (3), which is movable between two positions, a first position which is assumed when all the said fixing elements (12) are locked, and a second position which is assumed when at least one of the said fixing elements (12) is not locked,
each of the said entry pieces (2) comprising at least one first stop portion (21) which is capable of coming into engagement with a second stop portion (31), the said first stop portions (21) being designed in such a way as to act upon the said second stop portion (31) in order to position the said exit piece (3) in one or other of the said positions.

2. Child-care device according to claim 1, **characterised in that** the said entry pieces (2) and exit pieces are movable in rotation over a predetermined angular range.

3. Child-care device according to either of claims 1 or 2, **characterised in that** it comprises return means which bring the said exit piece (3) back into its second position as soon as one of the said entry pieces (2) is in its first position.

4. Child-care device according to any of claims 1 to 3, **characterised in that** each entry piece (2) is fastened to the corresponding fixing element (12) by a first cable (5), and **in that** the said exit piece (3) acts upon a second cable (6) in order to activate at least one locking indicator.

5. Child-care device according to claim 4, **characterised in that** the said second cable (6) is divided into two, by means which are provided for that purpose, in order to act upon two locking indicators (13).

6. Child-care device according to any of claims 1 to 5, **characterised in that** it comprises return means which act upon the said entry pieces (2) and/or upon the said exit pieces (3) in such a way as to bring them back into a predetermined position.

7. Child-care device according to claim 6, **characterised in that** each of the said entry pieces (2) carries a spring which tends to bring them back into the said first position.

8. Child-care device according to claim 7, **characterised in that** the said spring is mounted in such a way as to create a bistable which does not impose any force in the said first and second positions.

9. Child-care device according to any of claims 1 to 8, **characterised in that** the said entry pieces (2) are designed in such a way as to activate the unlocking of the said fixing elements (12).

10. Child-care device according to claim 9, **characterised in that** the said mechanical means for indicating the locking carry a manual control which makes it possible to displace the said entry pieces (2) in order to activate the unlocking of the said locking elements.

11. Child-care device according to any of claims 1 to 10, **characterised in that** the said receiving structure is mounted in a motor vehicle, and **in that** the said fixing elements (12) are fixings which are in conformity with the ISOFIX standard.

12. Child-care device according to any of claims 1 to 11, **characterised in that** the said entry pieces (61, 62, 63) are substantially rectilinear and are movable on a single axis of rotation (111), and **in that** the said exit piece (64) is also movable on the said single axis of rotation (111) and has a portion which extends substantially parallel to the said axis of rotation (111) and against which the said entry pieces (61, 62, 63) rest.

13. Child-care device according to claim 12, **characterised in that** the said exit piece (64) has the general shape of a "U", the two sides of which are integral with the said axis of rotation (111).

## Patentansprüche

1. Kinderpflegesvorrichtung mit einem Sitz zur Befestigung an einer Aufnahmestruktur über mindestens zwei Befestigungselemente, **dadurch gekennzeichnet, dass** sie mechanische Mittel zur Anzeige der ordnungsgemäßen Verriegelung dieser Befestigungselemente an der Aufnahmestruktur beinhaltet, dies mechanische Mittel umfassend:
- ein erstes Teil, sogenanntes Eingangsteil (2), das bei jedem der Befestigungselemente (12) zwischen zwei Position beweglich ist, und zwar einer ersten Position, die es einnimmt, wenn das Befestigungselement (12) nicht verriegelt ist, und einer zweiten Position, die es einnimmt, wenn das Befestigungselement (12) verriegelt ist;
- ein zweites Teil, sogenanntes Ausgangsteil (3), das zwischen zwei Position beweglich ist, und zwar einer ersten Position, die es einnimmt, wenn alle Befestigungselemente (12) verriegelt sind, und einer zweiten Position, die es einnimmt, wenn mindestens eines der Befestigungselemente (12) nicht verriegelt ist;
wobei jedes der Eingangsteile (2) mindestens einen ersten Anschlagsabschnitt (21) umfasst, der mit einem zweiten Anschlagsabschnitt (31) des Ausgangsteils im Eingriff stehen kann, wobei die ersten Anschlagsabschnitte (21) so angeordnet sind, dass sie auf den zweiten Anschlagsabschnitt (31) einwirken, um das Ausgangsteil (3) in die eine oder andere Position zu bewegen.

2. Kinderpflegesvorrichtung nach Anspruch 1, **dadurch gekennzeichnet, dass** die Eingangsteile (2) und Ausgangsteile in einem vorgegebenen Winkelbereich drehbeweglich sind.

3. Kinderpflegesvorrichtung nach einem der Ansprüche 1 oder 2, **dadurch gekennzeichnet, dass** sie Rückholmittel umfasst, die das Ausgangsteil (3) in seine zweite Position zurückführen, sobald eines der Eingangsteile (2) seine erste Position eingenommen hat.

4. Kinderpflegesvorrichtung nach einem der Ansprüche 1 bis 3, **dadurch gekennzeichnet, dass** jedes Eingangsteil (2) mit dem entsprechenden Befestigungselement (12) über einen ersten Seilzug (5) verbunden ist und dass das Ausgangsteil (3) auf einen zweiten Seilzug (6) einwirkt, um mindestens eine Verriegelungskontrollanzeige zu betätigen.

5. Kinderpflegesvorrichtung nach Anspruch 4, **dadurch gekennzeichnet, dass** der zweite Seilzug (6) durch hierzu vorgesehene Mittel gedoppelt ist, um auf zwei Verriegelungskontrollanzeigen (13) einzuwirken.

6. Kinderpflegesvorrichtung nach einem der Ansprüche 1 bis 5, **dadurch gekennzeichnet, dass** sie Rückholmittel umfasst, die auf die Eingangsteile (2) und/oder auf die Ausgangsteile (3) einwirken, so dass sie sie in eine vorgegebene Position zurückführen.

7. Kinderpflegesvorrichtung nach Anspruch 6, **dadurch gekennzeichnet, dass** jedes der Eingangsteile (2) eine Feder trägt, die bestrebt ist, sie in die erste Position zurückzuführen.

8. Kinderpflegesvorrichtung nach Anspruch 7, **dadurch gekennzeichnet, dass** diese Feder so angebracht ist, dass sie ein bistabiles Element, so dass in die ersten und zweiten Positionen keine Kraft anliegt.

9. Kinderpflegesvorrichtung nach einem beliebigen der Ansprüche 1 bis 8, **dadurch gekennzeichnet, dass** die Eingangsteile (2) so gestaltet sind, dass sie die Entriegelung der Befestigungselemente (12) betätigen.

10. Kinderpflegesvorrichtung nach Anspruch 9, **dadurch gekennzeichnet, dass** die mechanischen Mittel zur Anzeige der Verriegelung ein Handbedienelement tragen, das es ermöglicht, die Eingangsteile (2) zu bewegen, um die Entriegelung der Verriegelungselemente zu betätigen.

11. Kinderpflegesvorrichtung nach einem der Ansprüche 1 bis 10, **dadurch gekennzeichnet, dass** die Aufnahmestruktur in einem Kraftfahrzeug angebracht ist und dass die Befestigungselemente (12) Befestigungen nach der ISOFIX-Norm sind.

12. Kinderpflegesvorrichtung nach einem der Ansprüche 1 bis 11, **dadurch gekennzeichnet, dass** die Eingangsteile (61, 62, 63) annähernd geradlinig und um eine einzige Drehachse (111) beweglich sind und dass das Ausgangsteil (64) ebenfalls um diese einzige Drehachse (111) beweglich ist und einen annähernd parallel zu dieser Drehachse (111) verlaufenden Abschnitt aufweist, an dem die Eingangsteile (61, 62, 63) anliegen.

13. Kinderpflegesvorrichtung nach Anspruch 12, **dadurch gekennzeichnet, dass** das Ausgangsteil (64) die Grundform eines "U" hat, dessen beide Schekel mit der Drehachse (111) verbunden sind.
